# EUROPEAN PATENT APPLICATION

(11) **EP 1 388 861 A2**
(43) Date of publication of application: **11.02.2004**
(21) Application number: 03009628.3
(22) Date of filing: 29.04.2003
(51) Int. Cl.: G11B 23/03, G11B 33/04

(54) **Disk cartridge**

(30) Priority: 09.08.2002 JP 2002233811
(71) Applicant: Kabushiki Kaisha Toshiba, Tokyo (JP)
(72) Inventor: Wada, Katsutoshi, Kabushiki Kaisha Toshiba, Tokyo 105-8001 (JP); Nagai, Hideo, Kabushiki Kaisha Toshiba, Tokyo 105-8001 (JP); Nagasato, Makoto, Kabushiki Kaisha Toshiba, Tokyo 105-8001 (JP); Kurokawa, Kenya, Kabushiki Kaisha Toshiba, Tokyo 105-8001 (JP); Nagai, Koichi, Kabushiki Kaisha Toshiba, Tokyo 105-8001 (JP)
(74) Representative: Henkel, Feiler, Hänzel

(57) **Abstract**

A disk cartridge which contains an optical disk (12), comprising a first half shell (14), and a second half shell (16) which is openable against the first half shell (14), wherein the first half shell (14) is formed with notches (24) to expose a part of the circumference of the optical disk (12).

## Description

The present invention relates to an improved disk cartridge which removably contains an optical disk.

As is well known, a general playback-only optical disk represented by a music CD (Compact Disk), for example, is put in a case when storing, but it is exposed when inserting into and removing from a playback unit.

The loading mechanism of a playback unit is constructed to handle an exposed optical disk. A recording-type optical disk such as CD-R (Recordable) and CD-RW (Rewritable) is also handled in an exposed state in the same way as a CD when playing back data with a playback-only unit.

When inserting the above-mentioned playback-only optical disk into a case, the disk is supported in the hole formed at the center, and held floating in the case. Thus, when taking out the disk, the edges of the disk floating inside the case are held with fingers, and the disk taken out.

On the other hand, a data rewritable optical disk generally has lower data recording/playback reliability against damage and stains compared with a playback-only optical disk. Thus, it is preferable for the safety of data to insert the optical disk of this type into a protection cartridge.

For example, when an optical disk unit is used as a recording unit in a handy video camera, the optical disk is often handled outdoors. In this case, it is indispensable to contain the optical disk in a disk cartridge to prevent careless touching of the recording side when handling the disk.

When playing an optical disk with an optical disk unit applicable to a disk cartridge, the disk is loaded. into the unit while being contained in the disk cartridge.

In this case, when a disk cartridge is loaded by the loading mechanism to a predetermined playback position, an optical playback head accesses the recording side of the disk through an access window formed in the disk cartridge.

It is also considered to play back an optical disk with an optical disk unit which is not applicable to a disk cartridge. In this case, it is necessary to take out the disk from the disk cartridge and handle it as an exposed medium.

For example, Jpn. Pat. Appln. KOKAI Publication No. 9-213042 (August 15, 1997) proposed a disk cartridge which removably contains an optical disk.

The above-mentioned disk cartridge is provided with a flat base part and an openable flat cover part attached to the base part, and constructed to contain an optical disk between these base and cover parts.

In this case, the base and cover parts are formed with an access window for the optical head to access the recording side of an optical disk. An optical disk contained in a disk cartridge can be taken out by opening and separating the cover from the base part.

In the above-mentioned disk cartridge, when taking out an optical disk, the whole cartridge is turned over by one hand with the cover opened, and receives the disk by the other hand, or the center hole or the edges of the disk is held with the fingers avoiding the recording side.

However, in the disk cartridge with the above-mentioned structure, an optical disk may be dropped, or it is difficult to surely hold the center hole or the edges of the disk, and the disk may be stained with a fingerprint or damaged.

The present invention has been made considering the above circumstances. It is an object of the present invention to provide a disk cartridge which enables secure and easy holding and taking out an optical disk, prevents the recorded data loss caused by stains or damages, and prevents decrease of the reliability of an optical disk.

According to one aspect of the present invention, there is provided a disk cartridge which contains an optical disk, comprising a first half shell, and a second half shell which is provided openable against the first half shell, wherein the first half shell is formed with a part to expose a part of the circumference of the optical disk.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view for explaining a disk cartridge in the closed state according to an embodiment of the present invention;
FIG. 2 is a perspective view for explaining a disk cartridge in the opened state according to the same embodiment;
FIG. 3 is a perspective view for explaining the relationship between an optical disk and a disk cartridge in the opened state according to the same embodiment; and
FIG. 4 is a top view showing a modified disk cartridge according to the same embodiment.

Hereinafter, an embodiment of the present invention will be explained in detail with reference to the attached drawings. In this embodiment, a disk cartridge contains a relatively small optical disk with a thickness of about 1.2 mm and a diameter of 80 mm.

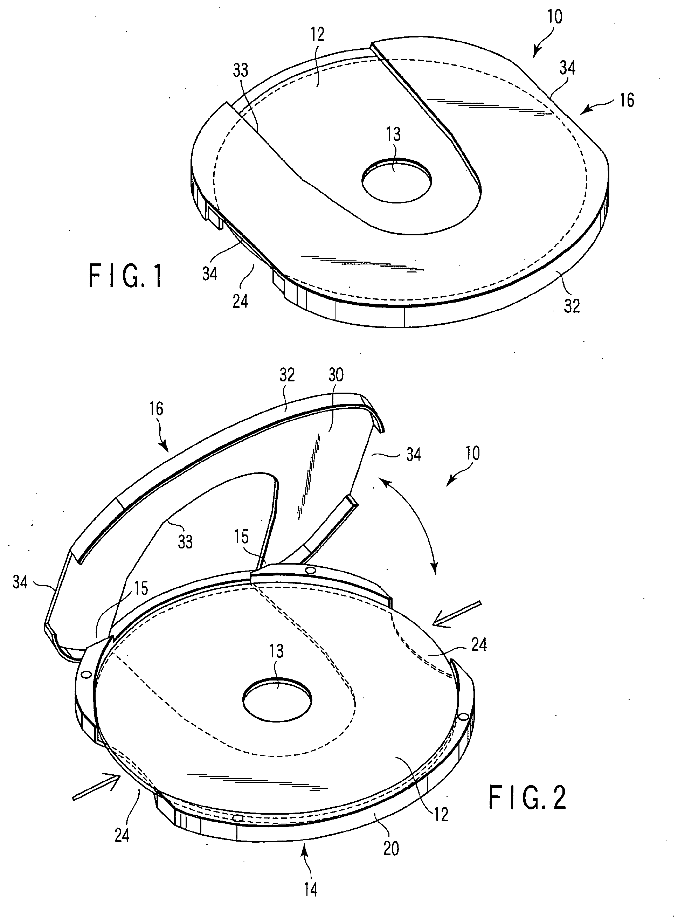

As shown in FIG. 1 to FIG. 3, a disk cartridge 10 comprises a first half shell 14 which functions as a base part and a second half shell 16 which functions as a cover part.

The second half shell 16 is provided openable against the first half shell 14 by means of a hinge 15. The disk cartridge 10 is flat and almost circular when the second half shell 16 is closed.

The first half shell 14 has a circular main wall 18 and a side wall 20 formed along the circumference of the main wall 18 in one body with the main wall. The main wall 18 has an inside diameter a little larger than the diameter of an optical disk 12, and the height of the side wall 20 is greater than the thickness of the optical disk 12.

The optical disk 12 is put on the main wall 18 with a little clearance between the inside of the side wall 20. The main wall 18 is formed with an access window 22 to access the optical disk 12. The access window 22 extends like a belt from the center to the edge of the main wall 18.

Further, the first half shell 14 is formed with a pair of notches 24 to hold the contained optical disk 12. The pair of notches 24 is formed by cutting a part of the side wall 20 and a part of the circumference of the main wall 18, and particularly in the main wall 18, the notches extend like a convex arc from the edge to the center.

The pair of notches 24 is positioned on both sides of the access window 22, opposite to each'other holding the central part of the main wall 18 therebetween. The distance between the pair of notches 24 is made smaller than the diameter of the optical disk 12.

The second half shell 16 is almost the same as the first half shell 14, except the notches 24. That is, the second half shell 16 has a circular main wall 30 and a side wall 32 formed along the circumference of the main wall 30 in one body with the main wall.

The main wall 30 has a diameter almost equal to the outside diameter of the first half shell 14, and the side wall 32 is made thinner than the side wall 20 of the first half shell 14. The main wall 30 is formed with an access window 33 to access the optical disk 12. The access window 33 extends like a belt from the center to the edge of the main wall 30.

In the side wall 32, the parts corresponding to the notches 24 of the first half shell 14 are cut off to form notches 34. These notches 34 are positioned on both sides of the access window 33, opposite to each other, holding the central part of the main wall 30 therebetween. These notches 34 are almost straight lines, and the distance between the notches 34 is set larger than the diameter of the optical disk 12.

When the optical disk 12 is contained and the second half shell 16 is closed, the main walls 18 and 30 of the first and second half shells 14 and 16 are opposite and parallel to each other, holding the optical disk 12 therebetween, and are opposite to the recording side of the optical disk 12.

In this case, the side wall 20 of the first half shell 14 is opposite to the circumference of the optical disk 12. The side wall 32 of the second half shell 16 engages with the outside of the side wall 20 of the first half shell 14.

Further, the access windows 22 and 23 are opposite to each other holding the optical disk 12 therebetween, and a part of both sides of the optical disk 12 and the center hole 13 of the optical disk 12 are exposed to the outside through these access windows 22 and 23. The notches 34 of the second half shell 16 overlap with the notches 24 of the first half shell 14.

In the disk cartridge 10, the optical disk 12 is contained with a slight clearance between the inside of the cartridge or contacting the non-recording part of the outer circumference of the optical disk 12 with the inside of the cartridge. In the outer circumference of the optical disk 12, the parts opposite to the notches 24 of the first half shell 14 are exposed through these notches 24.

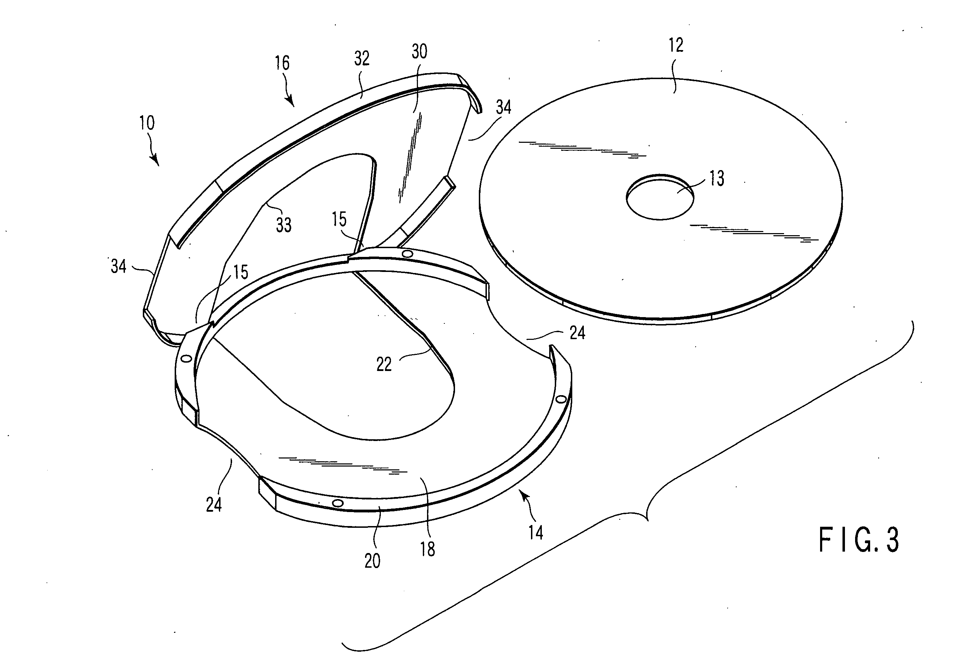

With the disk cartridge 10 configured as explained above, when taking out the optical disk 12, the second half shell 16 is turned and opened upward as shown in FIG. 2 and FIG. 3.

And, as indicated by an arrow in FIG. 2, the optical disk 12 can be taken out from the first half shell 14 by holding the edges of both side edges of the optical disk 12 at positions corresponding to the notches 24.

In this case, since the notches 24 extend toward the center hole 13 of the optical disk 12 spanning the edges of the optical disk 12, it is possible to hold the optical disk 12 securely by catching the edges of the optical disk 12 with fingers through these notches 24.

Therefore, when taking out the optical disk 12, a fingerprint by careless touching of the recording side of the optical disk 12, and other stains or damage caused by dropping the optical disk 12, can be prevented. At the same time, the optical disk 12 can be easily handled.

The present invention is not limited to the above-mentioned embodiment, and may be embodied in other specific forms without departing from its essential characteristics. For example, in the above-mentioned embodiment, the first half shell 14 is formed with a pair of notches 24, but only one notch 24 is also allowable.

In this case, when taking out the optical disk 12, for example, the optical disk 12 can be securely held without touching the recording side, by inserting a finger into the center hole 13 of the optical disk 12 while catching both edges of the optical disk 12 with other fingers through the notches 24. Thus, almost the same effect as the above-mentioned embodiment can be obtained.

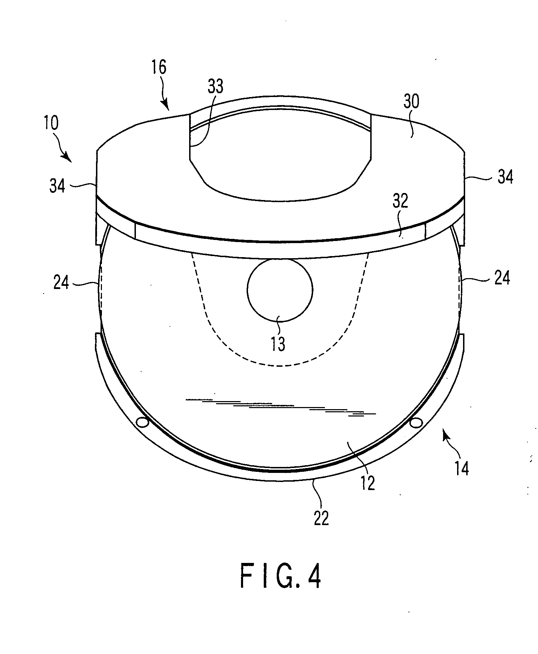

Further, the shape of the notches 24 is not limited to an arc, and can be triangular, polygonal or other optional shapes. For example, as shown in FIG. 4, the notches can be made as a straight line. However, in this case, also, the notches 24 extend a little toward the disk center from the edge of the optical disk 12. And, the edge of the optical disk 12 is exposed a little in the notches 24, permitting finger holding. The other parts are the same as those in the previously explained embodiment. The same reference numerals are given to the same parts, and detailed description is omitted.

Further, the present invention is not limited to an optical disk with a diameter of 80 mm, and is applicable also to optical disks with other diameters.

## Claims

1. A disk cartridge which contains an optical disk (12), comprising:
a first half shell (14), and a second half shell (16) which is provided openable against the first half shell (14), **characterized in that**
the first half shell (14) is formed with a part (24) to expose a part of the circumference of the optical disk (12).

2. A disk cartridge according to claim 1, **characterized in that** the first half shell (14) has a main wall (18) which is opposite to one side of the optical disk (12);
a side wall (20) which is formed along the circumference of the main wall (18) and opposite to the circumference of the optical disk (12); and
notches (24) which are formed in the side wall (20) and main wall (18), and extend toward the center of the optical disk (12) spanning the circumference of the optical disk (12), to expose a part of the circumference of the optical disk (12).

3. A disk cartridge according to claim 2, **characterized in that**:
the main wall (18) of the first half shell (14) has an access window (22) opposite to the center and one side of the optical disk (12); and
the second half shell (16) has a main wall (30) opposite to the other side of the optical disk (12) in the closed position, and an access window (33) formed in the main wall (30) and opposite to the center and a part of the other side of the optical disk (12).

4. A disk cartridge according to claim 2 or 3, **characterized in that** the notches (24) are made in arc form extending toward the center of the optical disk (12).

5. A disk cartridge according to claim 1,
**characterized in that**, the first half shell (14) has a main wall (18) which is opposite to one surface of the optical disk (12), a side wall (20) which is formed along the circumference of the main wall (18) and opposite to the circumference of the optical disk (12), and notches (24) which are formed in the side wall (20) and main wall (18) corresponding to both sides holding the center of the optical disk (12) therebetween, each of which extends toward the center of the optical disk (12) spanning the circumference of the optical disk (12), to expose a part of the circumference of the optical disk (12).

6. A disk cartridge according to claim 5, **characterized in that**:
the main wall (18) of the first half shell (14) has an access window (22). opposite to the center and one side of the optical disk (12); and
the second half shell (16) has a main wall (30) opposite to the other side of the optical disk (12) in the closed position, and an access window (33) formed in the main wall (30) and opposite to the center and a part of the other side of the optical disk (12).

7. A disk cartridge according to claim 5 or 6, **characterized in that** each of said pair of notches (24) is made in arc form extending toward the center of the optical disk (12).
